# EUROPEAN PATENT SPECIFICATION

(11) **EP 4 380 799 B1**
(45) Date of publication and mention of the grant of the patent: **25.03.2026**
(21) Application number: 22751854.5
(22) Date of filing: 27.07.2022
(51) Int. Cl.: B32B 37/12, B29C 39/12

(54) **METHOD FOR PRODUCING A COMPOSITE RESISTANT MATERIAL**
VERFAHREN ZUR HERSTELLUNG EINES VERBUNDWERKSTOFFS MIT WIDERSTANDSFÄHIGKEIT
PROCÉDÉ DE FABRICATION D'UN MATÉRIAU COMPOSITE RÉSISTANT

(30) Priority: 04.08.2021 IT 202100021047
(43) Date of publication of application: 12.06.2024
(73) Proprietor: B-MAX S.r.l., 50053 Empoli (FI) (IT)
(72) Inventor: CIOFFI, Cosimo, 50050 Loc. Pieve Cerreto Guidi (FI) (IT)
(74) Representative: Nesti, Antonio
(86) International application number: PCT/IB2022/056937
(87) International publication number: WO 2023/012603

(56) References cited:
- US-B1- 7 799 710
- US-B1- 8 545 652

## Description

### Technical Field

The invention relates to a method for making a composite resistant material intended to withstand mechanical loads, in particular concentrated impacts and explosions.

Products of this kind are, for example, reinforcement or cover plates, shatter-proof panels and protective covers or ballistic armour.

### Background art

Currently, a wide variety of materials are known and commercially available which in concrete use are intended to withstand concentrated mechanical loads. A method is known from US8545652 for obtaining resistant plates comprising a ceramic layer obtained from sintered nanoparticles and joined by means of a hot adhesive in layers of ductile material, for example Kevlar ^{®}.

However, the known type of resistant materials have significant limits in their ability to withstand concentrated impacts and being crossed by bodies at high speed and piercing capacity.

Furthermore, the known type of materials based on resistant ceramic plates are fragile in use and must be handled with a caution which is not suitable for use as ballistic plates.

In general, it is also desirable that this type of material, as well as resisting stress, is also light and small in size, as well as produced with easily accessible technologies and are able to last over time without requiring maintenance.

The need is therefore felt to be able to provide a method which allows the production of lightweight and highly protective composite resistant materials even from violent impacts and high intensity, such as impacts of piercing projectiles.

### Object of the invention

The present invention intends to overcome the drawbacks of the already known solutions and to propose a method for producing a composite material of high strength and with limited weight per unit of covered surface.

### Summary of the invention

These objects have been achieved by means of a productive method of materials, for example composite plates according to at least one of the appended claims.

A first advantage is that with the treatment of the invention it is possible to significantly improve the impact resistance performance of the composite material, which has a high ability to counteract the detachment delamination of the component parts of the material, and is thus able to maintain the resistance features even against subsequent impacts.

A second advantage of the invention consists in obtaining the same level of protection but with at least 10-35% less weight with respect to the currently used solutions and a significant improvement in terms of the absorption potential of multi hits compared to the solutions currently in use.

A further advantage of the invention is that composite plates with high performance, lightweight and suitable for use as ballistic protection, in particular of turrets and armoured vehicles or aircraft, are obtainable at limited cost and with industrial processes, reducing the use of aluminium or steel used for the armour of armoured vehicles.

A further advantage of the invention is that the obtained plate shows excellent results in terms of strength/resilience to extreme maritime and atmospheric conditions.

A further advantage of the invention is that the obtained plate meets the requirements of level 4 (AP-API projectile resistance) of the "Ballistic Resistance of Body Armor **NIJ** Standard-0101.06" issued by the U.S. Department of Justice.

### List of Drawings

These and other advantages will be better understood by anyone skilled in the art from the description below and the accompanying drawings, given as nonlimiting example, in which:
- fig.1a ,1b,1c respectively show an exploded view, a plate inserted in a form work during production and a cross section of a composite plate obtained;
- fig. 1d shows a further embodiment of a plate produced with the method according to the invention;
- fig. 1e,1f respectively show a further embodiment of a plate inserted in a form work during production and a cross section of a composite plate obtained;
- fig. 2 shows in section a second embodiment of a plate produced with the method according to the invention,
- fig. 3 shows in section a third embodiment of a plate produced with the method according to the invention,
- fig. 4 shows in top view a composite plate produced with the method according to the invention composed of hexagonal prismatic sectors
- fig. 5 schematically shows a method according to the invention;
- figures 6a, 6b respectively show an image of the entry and exit hole of a conventional aluminium plate for ballistic armour;
- figures 7a, 7b respectively show an image of entry and exit holes in a composite plate produced with the method according to the invention;
- figures 8a,8b show an image of entry and exit holes of a second composite plate produced with the method according to the invention hit by multi hits.
- fig. 9a, 9b respectively show the strain stress diagrams of two different sets of samples produced with the method of the invention;
- figures 10a, 10b respectively show the results of the mechanical characterization measurements of the samples depicted in the diagrams of figures 9a, 9b;
- fig.11a, 11b respectively show the arrival side and the exit side of a resistant plate of the state of the art reached by a piercing hit.
- fig. 12 shows an incendiary piercing projectile;
- fig. 13 shows an example of a helmet produced with a resistant material produced with the method according to the invention.

### Detailed description

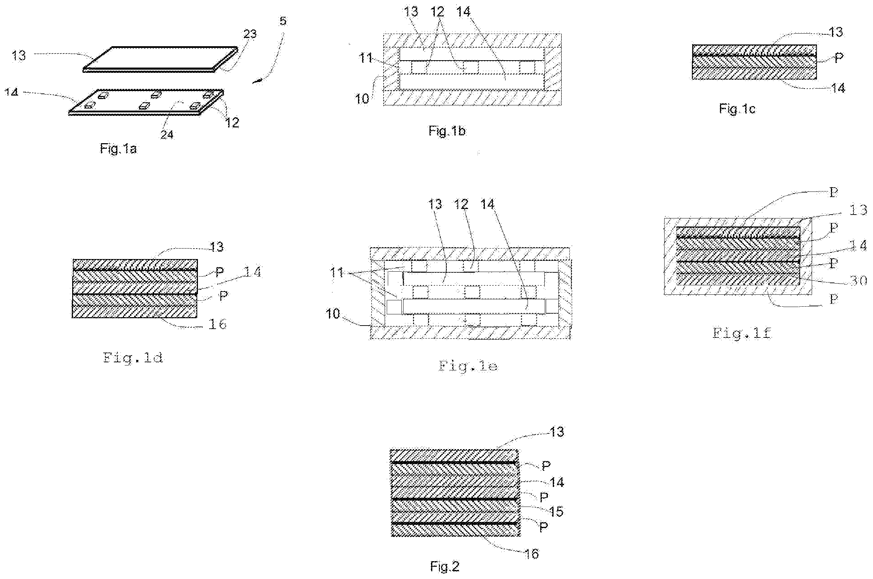

With reference to the accompanying drawings, a preferred embodiment of a method according to the invention is described for producing a composite material, for example (fig.1-3) a composite plate 5 starting from at least two spaced-apart component bodies of a gap 11, consisting of the example described by starting plates 13, 14 each made of a material selected from metallic materials such as steel, aluminium, brass, lead, titanium, or ceramic materials such as alumina, boron or silicon oxide, or fibre materials such as carbon fibre plates, aramid or kevlar fibres, metallic and/or non-metallic inorganic fibres, in non-woven fabric or fabric or even plastic materials such as polyamide.

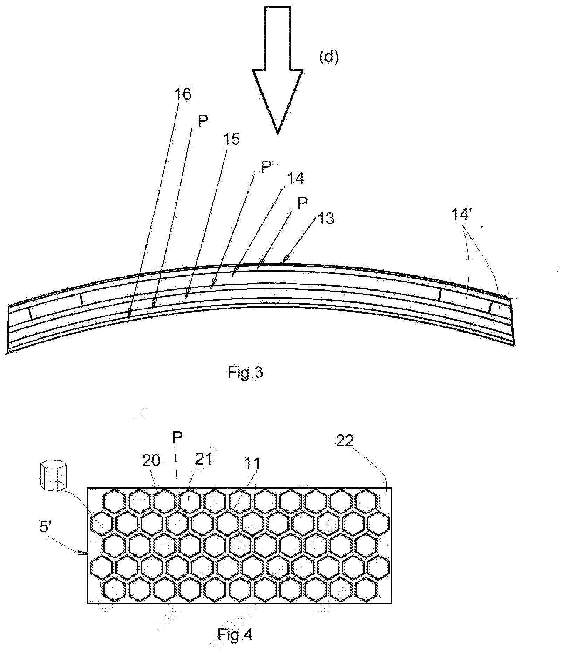

Fig.4 depicts a further embodiment of a resistant plate 5' obtained with a method according to the invention, in which the component bodies consist of hexagonal prisms 20, 21 in ceramic material, joined together with a gap 11 and possibly contained by a frame 22.

By way of example, a ceramic material suitable for use is a ceramic material with a Vickers hardness greater than 1500 and up to about 2500 Vickers in the case of boron carbide, i.e., materials having a hardness much greater than, for example, the materials constituting the projectiles.

By way of example, suitable ceramic materials are boron carbide, having a specific weight of approximately 2.6 g/cm3 and a hardness of 2500/2600 Vickers, silicon carbide having a specific weight of approximately 3.2 g/cm3 and a hardness of 2200/2300 Vickers and alumina, or aluminium oxide, having a specific weight of approximately 3.9 g/cm3 and a hardness of 1800/2000 Vickers.

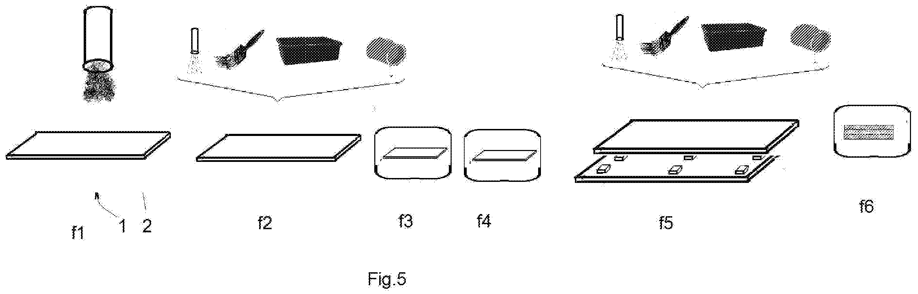

According to the method of the invention, schematically shown in figure 5, the adjacent outer surfaces 23, 24 of the component bodies are subjected to a cleaning step F1 preferably a mechanical cleaning, for example by shot peening or sandblasting or tumbling, until the complete removal of residues from the surface, in particular of oxidation traces in the case of plates in oxidizing material, and the creation of an improved pre-treated surface for the adhesion of an adhesive.

The cleaning step can comprise a removal of dust created for example by the surface shot peening
By way of preferred example, the surface cleaning of the plate is carried out with sixteen degree Almen shot peening, for example by using four 5 kw centrifugal impellers, was found to be particularly effective.

A coating formed by an adhesive, also called primer or glue, is then applied to the cleaned and pre-treated surface of the plates (step F2), for example by injection, coating, casting, immersion or spraying.

Once the coating is completed, the component bodies are dried (step F3) in a moisture-free environment, preferably at a temperature between 15 C° and 25 C°. The drying step continues with a pre-heating of the plates (step F4) which is prolonged until the reduction of the surface viscosity of the adhesive, for example by heating at a temperature between 50 and 200 C° in order to facilitate the subsequent bonding of a compatible thermosetting polymer adapted to bond to the adhesive, which in this step is sticky to the touch.

The treatment described above can further be separately applied to each component body or to component bodies assembled with a spacer distribution.

In the illustrated case of the plates of fig.1-3 the spacers are formed by blocks 12 interposed between the starting plates, arranged so as to create gaps 11 between the coupled starting plates, while in the example of fig.4 the prisms 20, 21 can be spaced by a frame 22 or placed in suitably spaced seats.

At the end of the pre-heating step, the component bodies, i.e., in the cases described, the starting plates 13, 14 assembled with spacers 12, or the spaced prisms 20, 21 are then subjected to a coupling step (step F5) of the material already coated with the adhesive in the viscous state, with a thermosetting polymer composed of two or more components, at least one of which is compatible with the adhesive.

Within the scope of the present disclosure, an adhesive-compatible polymer component is to be understood as a component capable, in combination with the adhesive, of establishing an adhesive bond between the polymer and the adhesive-coated surface.

The coupling step can be performed by injection, casting, coating, dipping, lining, spraying, or other technique adapted to apply the polymer, depending on the shape and composition of the material.

Preferably, the polymer is a two-component polyurethane, for example a polyurethane marketed as adiprene ^{®} but polymers of different types, for example silicone polymers, and with a different number of components, can be used, as long as at least one compatible with the adhesive used is capable of forming an adhesive bond.

Preferably, the step of coupling with the polymer can be performed by casting the polymer in a form work 10 for containing the plate until filling the gap 11 between the starting plates 13, 14 so that the polymer constitutes an intermediate bonding layer P.

Advantageously, it has been found that the diffusion of the polymer in the gaps 11 is favoured by the preheating of the component bodies of the material, thus being able to create intermediate polymer-binding layers P even of very small thicknesses, of the order of the millimetre.

Preferably, the gaps are obtained by blocks the spacers 12 between the plates 13, 14 which have a thickness which is predetermined based on the desired strength characteristics of the final plate 5 and can be composed of the same polymer material used for the coupling step, and possibly also be subject to the same treatment performed on the starting plates.

The plate 5 assembled with the starting plates coupled to the polymer is then treated (step F6) to obtain the complete hardening and complete activation of the bond between the polymer and the adhesive.

Preferably, the step of hardening and activating the bond occurs by heating, for example in an oven, at a temperature between 50 °C and 200 °C for a period preferably between 10 min and a few hours, for example 3-5 hours, depending on the heat resistance of the material of the starting plates, and in any case until the polymer is hardened and the coupling of said adhesive with the polymer is fully activated.

However, this step can occur at room temperature, depending on the polymer used.

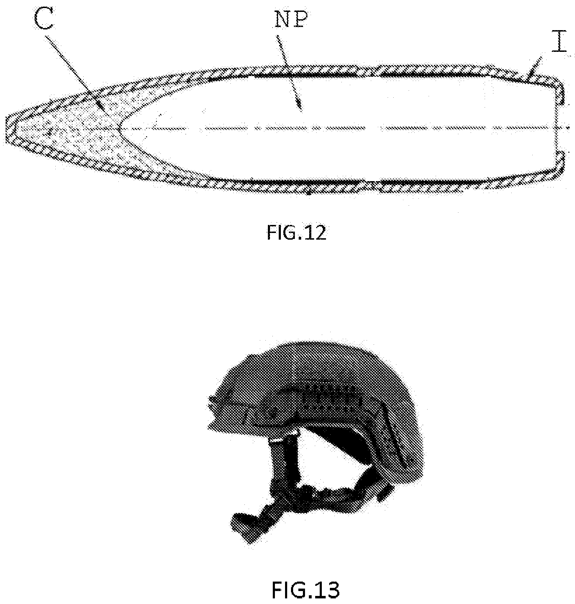

It has been found that the plate 5 obtained with the material produced with the method of the invention is particularly effective as ballistic armour when the first plate 13 arranged on the impact side of a projectile, for example an API incendiary piercing projectile of the type illustrated in fig.13 composed of a casing I containing a piercing core **NP** and an incendiary charge C, is an aluminium plate, and the second plate 14 is a plate of ceramic material, for example boron, silicon or alumina carbide. (fig.1, 1c).

Preferably, the structure of fig.1c can be associated with a further steel layer 16, applied on the exit side of the projectile with the method of the invention, in which case the resulting structure will be that schematically shown in fig. 1d. Advantageously, the material produced with the method of the invention can further provide an outer layer of polymer P on one or more outer faces of the composite plate obtained with the method.

In figures 1e, 1f, a plate of the type of fig.1d comprising a complete shell with polymer P obtained by providing spacers 12 arranged both on the faces and on the sides, and a form work 10 suitable for the purpose, are respectively schematically shown by way of example.

With this configuration it was found that the ceramic material reached by the projectile, although it can be crossed, is not dispersed by virtue of the intimate bonding with the polymer layer which counteracts the delamination of the composite material and thus prevents the ceramic from breaking freely and makes it able to resist multi-hits, unlike the known armours based on ceramic plates which tend to fracture after the first blow and thus become useless.

By virtue of effect, the ceramic in fact consumes the material of the projectile which crosses it, which is of much lower hardness, and reduces its residual energy on the exit side, at which a further absorption plate of the residual impact can be advantageously provided, for example due to the kinetic energy of the remaining core of the projectile, preferably composed of plastic material, for example polyamide, or fibre or steel material which, by virtue of its resistance and ductility, is able to deform and contain the residual mass of the projectile, avoiding or reducing trauma to the wearer of the armour.

In general, it was found that the plate produced with the method of the invention allows to absorb the kinetic energy caused by the impact with a projectile so as to avoid any profound alteration of the structure.

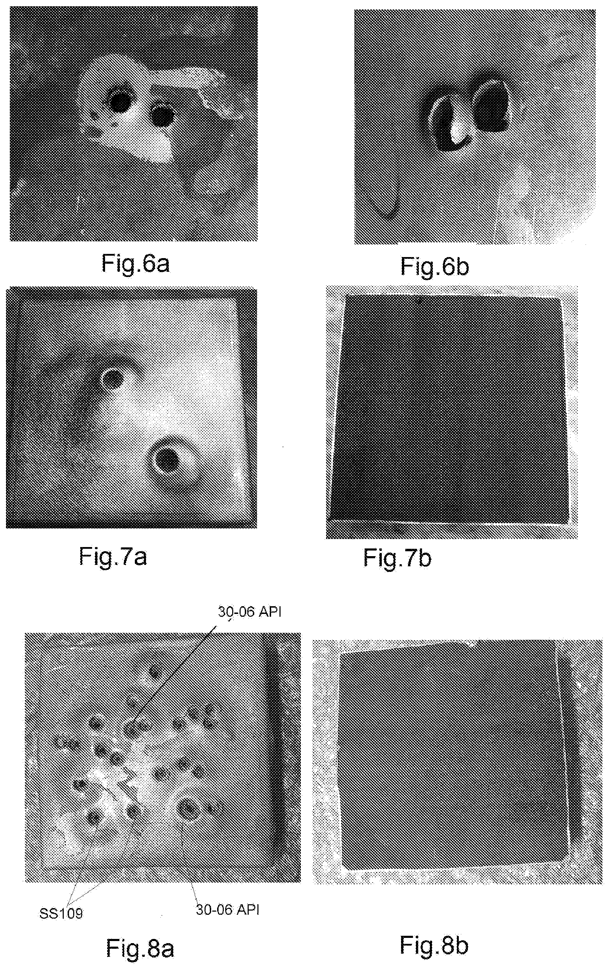

In particular, it has been found that the combination of the presence of a first plate of aluminium (or other ductile material) on the arrival side of the projectile and the presence of the polymer binding layers strongly adhering to the adjacent plates brings about, as mentioned, the effect of containing the tendency to delaminate and thus minimizing the size of the entry hole, preventing the typical "artichoke" extroflexed opening (fig. 6a, 6b) that the conventional armours (in the example shown, a 25 mm aluminium plate) undergo on the entry side of the projectile due to the high energy released by the projectile, while the composite plate produced with the method of the invention allows to reduce both the damage of the first plate (fig. 7a, 8a) and the same exit of the projectile (fig. 7b, 8b) .

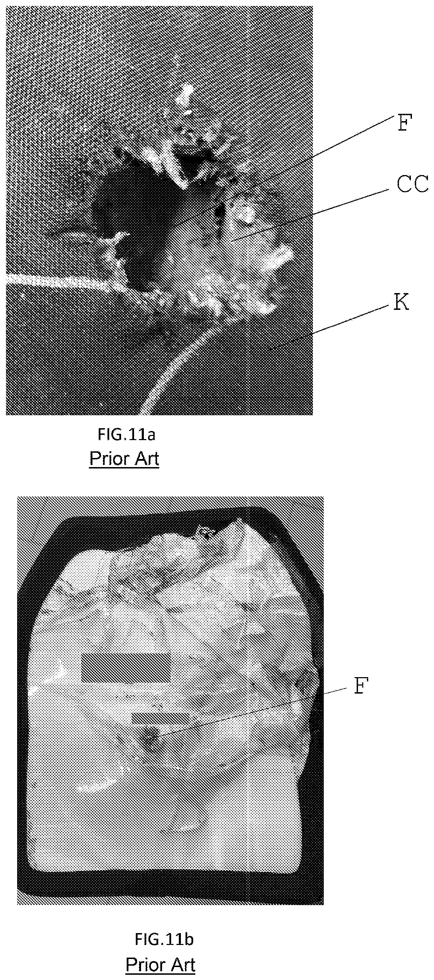

In this regard, figs. 11a to 11b show the hole F on the entry and exit side of a piercing shot received by a traditional ballistic plate composed of a ceramic body CC coupled to a fibre layer, for example Dyneema ^{®}.

Figure 8a, 8b illustrates an example of a plate produced with the method according to the invention subjected to multi hits of which two piercing types 30-06 API and eighteen of type SS109 NATO-NATO and in which the presence of various entry holes can be appreciated, fig.8a, and the lack of exit holes, fig.8b.

To clarify the distance between the hits received, it is specified that the plate shown in fig.8a, 8b has dimensions equal to 115mm x 115mm by 25mm thickness.

Figure 2 illustrates a preferred embodiment of the plate for use as ballistic armour, comprising:
a first aluminium starting plate 13, preferably between one and four mm thick, preferably three mm,
a second ceramic starting plate 14, for example alumina, or boron or silicon oxide, preferably of a thickness between four and six, preferably five mm, possibly formed by several ceramic plates 14, 14' side by side,
a third starting plate 15 preferably between four and six, preferably five mm thick. Preferably, the plate 15 consists of carbon or kevlar fibres, or aramid fibres, or metallic and/or non-metallic inorganic fibres with high melting point and non-flammable, such as the fibres marketed with the name "nextel" ^{®} by the company 3M ^{®} capable of containing the temperature caused by the projectile or by the dart of hollow charges, even double, and useful for example to stop anti-tank missiles according to the specifications Stanag 4569 with regard to darts and Stanag 2920 AEP 55 for projectiles.
a fourth starting plate 16 in steel preferably between two and four millimetres thick, preferably two mm;
intermediate layers P of binder polymer between the plates 13, 14, 15, 16 preferably three mm thick.

Figure 3 shows a curved configuration of the plate of figure 2, with a convex curvature towards an arrival direction (d) of an expected impact, particularly useful as ballistic armour for the protection of accidental impacts against the first plate 13, according to the direction schematically shown in figure 3.

Advantageously, the plate of figures 2 and 3 allows to obtain a high ballistic protection while containing the overall thickness in about 25 mm and considerably reducing the weight with respect to conventional armour with the same performance, thus lending itself to use as ballistic armour.

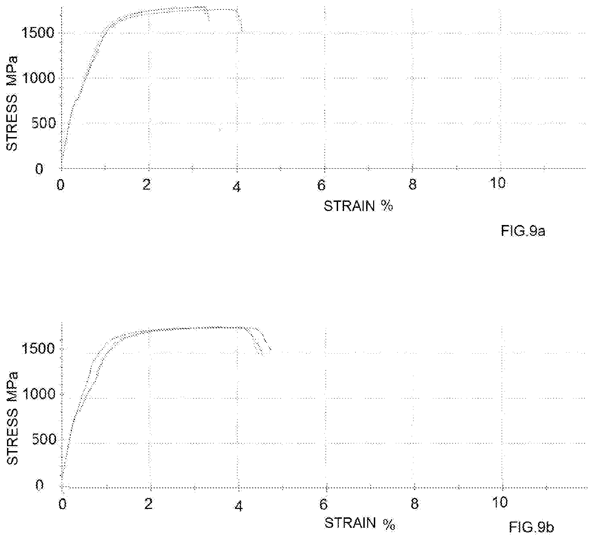

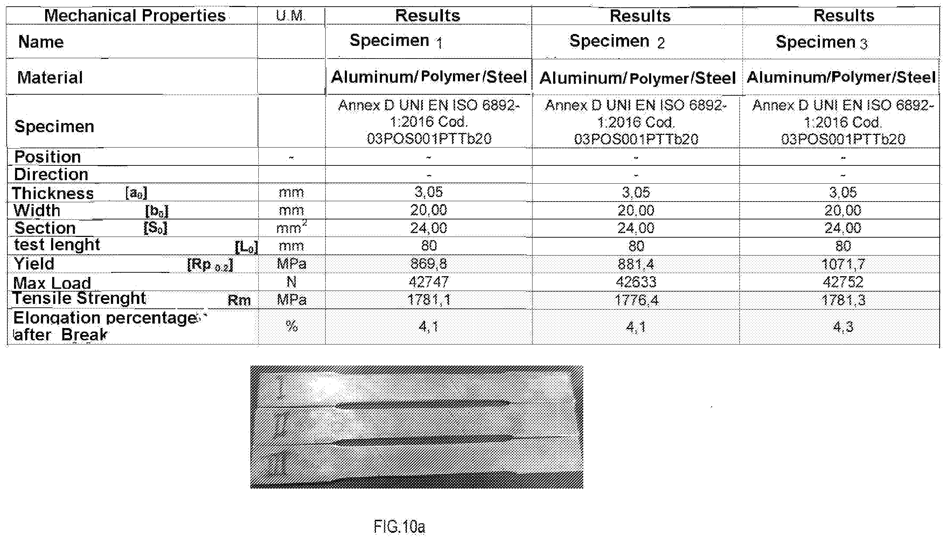

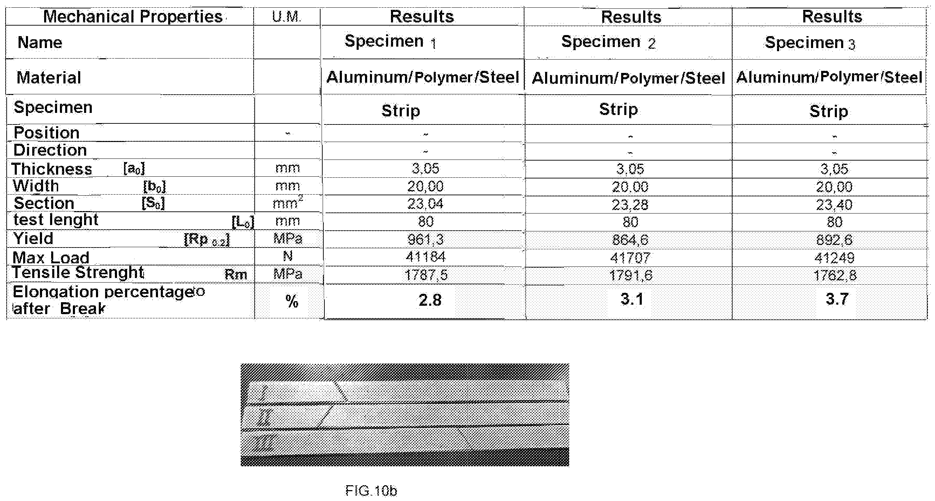

In a preferred embodiment, the plate produced with the method of the invention consists of a steel layer with a thickness between 1mm and 1.5mm, preferably 1.2mm coupled with a 1mm aluminium layer and a polymer intermediate layer of about 1mm, figures 9, 10 respectively show the stress/strain diagrams and the mechanical characterization tables of two different series of three samples (fig.9a, fig.10a) and three strips (fig.9b, fig.10b) thus produced. Advantageously, with this configuration, a plate with a thickness of about 3 mm demonstrated a tensile strength of just under 1800 Mpa and at the same time proved capable of significant elongation, thus being suitable for machining and forming.

By way of example, the plate produced with the method of the invention will be usable for the protection of:
- places and vehicles for civilian use such as embassies, consulates, pipelines/oil pipelines, nuclear power plants, railway stations, airports, cars, trucks, boats, ambulances, hospitals (also for the simultaneous protection from X-rays using a lead plate), containers of hazardous materials, anti-riot vehicles, security vaults for example of banks,
- places and vehicles for military use such as armoured cellars, ammunition depots, military ambulances, military field hospitals, protection barriers (gates, check points, guard posts,), helicopters and aircraft (seats and flooring), command rooms, operating chambers, nuclear bunkers, ships and submarines, protective clothing such as vests and helmets (fig.13).

The invention has been described with reference to a preferred embodiment, but it is intended that equivalent modifications can be made without however departing from the scope of the present invention as set out in the appended claims.

## Claims

1. Method for producing a composite resistant material (5, 5'), comprising the following steps:
preparing at least two component bodies (13, 14, 15, 16, 20, 21) each consisting of a material selected from fibre materials such as carbon fibre, aramid fibres, metallic or non-metallic inorganic fibres or ceramic materials such as alumina, boron or silicon carbide, or metallic materials such as aluminium, brass, lead, steel, or plastic materials such as polyamide,
cleaning at least one outer coupling surface (23, 24) of each of said bodies (13, 14, 15, 16) preferably by means of mechanical cleaning by shot peening or sandblasting or tumbling until any surface impurities are removed, and any dusting;
preparing at least two adjacent component bodies with a free intermediate gap (11) between the respective coupling surfaces;
coating the clean coupling surfaces of said bodies (13, 14, 15, 16) with an adhesive;
drying said coated bodies (13, 14, 15, 16) in the absence of moisture at a temperature preferably between 15°C and 25°C;
pre-heating said bodies (13, 14, 15, 16) until the reduction of the surface viscosity of said adhesive, at a temperature preferably between 50°C and 200°C;
coupling the coupling surfaces of said bodies (13, 14, 15, 16) coated with said adhesive in the viscous state with an amount of thermosetting polymer consisting of two or more components, at least one of which is compatible with said adhesive, arranged to fill said gap (11) so as to create an intermediate layer of polymer (P) between said bodies (13, 14, 15, 16);
hardening the polymer and complete activation of the bond of said adhesive with said polymer.

2. Method according to claim 1, wherein said hardening occurs by heating said bodies (13, 14, 15, 16) coupled to the polymer at a temperature preferably between 50°C and 200°C.

3. Method according to claim 1 or 2, wherein said at least two bodies are in the form of monolithic plates or composed of several portions.

4. Method according to claim 1 or 2, wherein said at least two bodies are in the form of hexagonal prisms (20, 21) in ceramic material, joined to each other with a gap (11) and possibly contained by a frame (22).

5. Method according to one of the preceding claims, wherein said coupling is performed by injection, spreading, casting, immersion or spraying.

6. Method according to one of the preceding claims, wherein said coupling step is performed by injecting or casting said polymer into a formwork (10) hosting said bodies (13, 14, 15, 16) until filling said gap (11) and creating an intermediate binder layer (P) between adjacent bodies.

7. Method according to one of the preceding claims, wherein said polymer is selected from polyurethane or silicone with two or more components.

8. Method according to one of the preceding claims, wherein said gap is created by spacers (12) preferably of the same material as the coupling polymer.

## Patentansprüche

1. Verfahren zur Herstellung eines festen Verbundwerkstoffs (5, 5'), umfassend die folgenden Schritte:
Herstellen von mindestens zwei Bauteilen (13, 14, 15, 16, 20, 21), die jeweils aus einem Werkstoff bestehend aus: Faserwerkstoffen wie Kohlenstofffasern, Aramidfasern, metallischen oder nichtmetallischen anorganische Fasern oder keramischen Werkstoffen wie Aluminiumoxid, Bor oder Siliciumcarbid oder metallischen Werkstoffen wie Aluminium, Messing, Blei, Stahl oder Kunststoffe wie Polyamid;
Reinigen von mindestens einer äußeren Fügefläche (23, 24) jedes der Körper (13, 14, 15, 16), vorzugsweise durch mechanische Reinigung mittels Kugelstrahlen, Sandstrahlen oder Tribo-Finishing, bis alle Oberflächenverunreinigungen entfernt und Staub abgetrennt ist;
Herstellen von mindestens zwei benachbarten Bauteilen mit einem freien Zwischenraum (11) zwischen den jeweiligen Fügeflächen;
Beschichten der sauberen Fügeflächen der Körper (13, 14, 15, 16) mit einem Klebstoff ;
Trocknen der beschichteten Körper (13, 14, 15, 16) unter Ausschluss von Feuchtigkeit bei einer Temperatur, vorzugsweise zwischen 15 °C und 25 °C;
Vorwärmen der Körper (13, 14, 15, 16) bei einer Temperatur, vorzugsweise zwischen 50 °C und 200 °C, bis die Oberflächenviskosität des Klebstoffs abnimmt;
Verbinden der mit viskosen Klebstoff beschichteten Fügeflächen der Körper (13, 14, 15, 16) mit einer Menge eines duroplastischen Polymers, bestehend aus zwei oder mehr Bauteilen, von denen mindestens eine mit dem Klebstoff kompatibel ist, so dass der Zwischenraum (11) ausgefüllt wird, um eine Zwischenpolymerschicht (P) zwischen den Körpern (13, 14, 15, 16) zu bilden;
Aushärten des Polymers und die Verbindung zwischen Klebstoff und Polymer vollständig Aktivieren.

2. Verfahren nach Anspruch 1, wobei die Aushärtung durch Erhitzen der mit dem Polymer verbundenen Körper (13, 14, 15, 16) bei einer Temperatur vorzugsweise zwischen 50 °C und 200 °C erfolgt.

3. Verfahren nach Anspruch 1 oder 2, wobei die mindestens zwei Körper monolithische Platten bilden oder aus mehreren Abschnitten bestehen.

4. Verfahren nach Anspruch 1 oder 2, wobei die mindestens zwei Körper hexagonale Prismen (20, 21) aus keramischem Material bilden, die durch einen Spalt (11) miteinander verbunden und gegebenenfalls von einem Rahmen umschlossen sind.

5. Verfahren nach einem der vorhergehenden Ansprüche, wobei die Verbindung durch Spritzgießen, Verstreichen, Formen, Eintauchen oder Sprühen erfolgt.

6. Verfahren nach einem der vorhergehenden Ansprüche, wobei der Kopplungsschritt durch Einspritzen oder Gießen des Polymers in eine Form (10) erfolgt, die die Körper (13, 14, 15, 16) aufnimmt, bis der Spalt (11) gefüllt und eine Zwischenbindemittelschicht (P) zwischen den benachbarten Körpern gebildet ist.

7. Verfahren nach einem der vorhergehenden Ansprüche, wobei das Polymer aus Polyurethan oder Silikon mit zwei oder mehr Bauteilen besteht.

8. Verfahren nach einem der vorhergehenden Ansprüche, wobei der Spalt durch Abstandshalter (12), vorzugsweise aus demselben Material wie das Kopplungspolymer, gebildet wird.

## Revendications

1. Procédé de fabrication d'un matériau composite résistant (5, 5'), comprenant les étapes suivantes :
préparer au moins deux corps composants (13, 14, 15, 16, 20, 21), chacun constitué d'un matériau choisi parmi des matériaux fibreux comme des fibres de carbone, des fibres aramides, des fibres inorganiques métalliques ou non métalliques ou des matériaux céramiques comme l'alumine, le bore ou le carbure de silicium, ou des matériaux métalliques comme l'aluminium, le laiton, le plomb, l'acier ou des matériaux plastiques comme la polyamide,
nettoyer au moins une surface de couplage extérieure (23, 24) de chacun des dits corps (13, 14, 15, 16), de préférence par nettoyage mécanique par grenaillage ou sablage ou tribo-finition jusqu'à élimination de toutes les impuretés de surface et dépoussiérage ;
préparer au moins deux corps de composants adjacents avec un espace intermédiaire libre (11) entre les surfaces de couplage respectives ;
recouvrir d'un adhésif les surfaces de couplage propres desdits corps (13, 14, 15, 16) ;
sécher lesdits corps revêtus (13, 14, 15, 16) en l'absence d'humidité à une température de préférence comprise entre 15°C et 25°C ;
préchauffer lesdits corps (13, 14, 15, 16) jusqu'à la réduction de la viscosité superficielle dudit adhésif, à une température de préférence comprise entre 50 °C et 200 °C ;
coupler les surfaces de couplage desdits corps (13, 14, 15, 16) revêtues avec ledit adhésif à l'état visqueux avec une quantité de polymère thermodurcissable composée de deux ou plusieurs composants, dont au moins un est compatible avec ledit adhésif, disposée de manière à remplir ledit espace (11) afin de créer une couche intermédiaire de polymère (P) entre lesdits corps (13, 14, 15, 16) ;
durcir le polymère et activer complètement la liaison dudit adhésif avec ledit polymère.

2. Procédé selon la revendication 1, dans lequel ledit durcissement se produit par chauffage desdits corps (13, 14, 15, 16) couplés au polymère à une température de préférence comprise entre 50°C et 200°C.

3. Procédé selon la revendication 1 ou 2, dans lequel lesdits au moins deux corps se présentent sous la forme de plaques monolithiques ou sont composés de plusieurs portions.

4. Procédé selon la revendication 1 ou 2, dans lequel lesdits au moins deux corps sont sous la forme de prismes hexagonaux (20, 21) en matériau céramique, reliés entre eux par un espace (11) et éventuellement contenus par un cadre.

5. Procédé selon l'une des revendications précédentes, dans lequel ledit couplage est réalisé par injection, étalement, moulage, immersion ou pulvérisation.

6. Procédé selon l'une des revendications précédentes, dans lequel ladite étape de couplage est réalisée en injectant ou en coulant ledit polymère dans un moule (10) accueillant lesdits corps (13, 14, 15, 16) jusqu'à remplir ledit espace (11) et créer une couche de liant intermédiaire (P) entre les corps adjacents.

7. Procédé selon l'une des revendications précédentes, dans lequel ledit polymère est choisi parmi le polyuréthane ou le silicone à deux ou plusieurs composants.

8. Procédé selon l'une des revendications précédentes, dans lequel ledit espace est créé par des entretoises (12), de préférence du même matériau que le polymère de couplage.
